# EUROPEAN PATENT APPLICATION

(11) **EP 4 528 841 A1**
(43) Date of publication of application: **26.03.2025**
(21) Application number: 23807226.8
(22) Date of filing: 30.01.2023
(51) Int. Cl.: H01M 4/13, H01M 4/62

(54) **ELECTRODE AND SECONDARY BATTERY**

(30) Priority: 19.05.2022 JP 2022082446
(71) Applicant: DAIKIN INDUSTRIES, LTD., Osaka-shi, Osaka 530-0001 (JP)
(72) Inventor: Fukushima, Kanta, Osaka-Shi, Osaka 530-0001 (JP); UEDA, Yuki, Osaka-Shi, Osaka 530-0001 (JP); YAMAZAKI, Shigeaki, Osaka-Shi, Osaka 530-0001 (JP)
(74) Representative: Hoffmann Eitle
(86) International application number: PCT/JP2023/002883
(87) International publication number: WO 2023/223608

(57) **Abstract**

Provided is an electrode comprising an electrode active material layer and a polymer layer formed on the electrode active material layer, wherein the polymer layer comprises a copolymer comprising a fluoromonomer unit and an amide bond-containing monomer unit, and an inorganic particle.

## Description

### TECHNICAL FIELD

The present disclosure relates to an electrode and a secondary battery.

### BACKGROUND ART

Patent Document 1 discloses a lithium ion secondary battery including a positive electrode, a negative electrode, a polymer layer, and a lithium ion permeable insulating layer, wherein the positive electrode includes a positive electrode active material layer containing a positive electrode active material capable of absorbing and desorbing lithium, and a positive electrode current collector, the negative electrode includes a negative electrode active material layer formed by a vapor phase method and containing an alloy-based negative electrode active material and a negative electrode current collector, the polymer layer is formed on a surface of the negative electrode active material layer and contains a first polymer and a first inorganic oxide particle, and the lithium ion permeable insulating layer is disposed in such a way as to be interposed between the positive electrode and the negative electrode.

Patent Document 2 discloses a composition characterized by including an inorganic filler, a copolymer of a fluoromonomer and a polymerizable vinyl compound having an amide bond, and a solvent.

### RELATED ART

### PATENT DOCUMENTS

Patent Document 1: Japanese Patent Laid-Open No. 2010-250968
Patent Document 2: International Publication No. WO 2020/054210

### SUMMARY OF THE INVENTION

### PROBLEM TO BE SOLVED BY THE INVENTION

An object of the present disclosure is to provide an electrode that can provide a secondary battery that is unlikely to decrease in storage capacity even after storage at a high temperature and that is unlikely to increase in resistance even after repeated charge and discharge.

### MEANS FOR SOLVING THE PROBLEM

According to a first aspect of the present disclosure, an electrode including an electrode active material layer and a polymer layer formed on the electrode active material layer, wherein the polymer layer contains a copolymer containing a fluoromonomer unit and an amide bond-containing monomer unit, and an inorganic particle is provided.

### EFFECTS OF INVENTION

According to the present disclosure, it is possible to provide an electrode that can provide a secondary battery that is unlikely to decrease in storage capacity even after storage at a high temperature and that is unlikely to increase in resistance even after repeated charge and discharge.

### DESCRIPTION OF EMBODIMENTS

Hereinafter, specific embodiments of the present disclosure will be described in detail, but the present disclosure is not limited to the following embodiments.

The electrode of the present disclosure includes an electrode active material layer and a polymer layer formed on the electrode active material layer.

Patent Document 1 discloses that it is possible to obtain a lithium ion secondary battery, which uses an alloy-based negative electrode active material, having excellent battery performance such as charge/discharge cycle characteristics or output characteristics, having a long service life, exhibiting very little deterioration in the battery characteristics even when the number of charge and discharge is increased, and being highly safe against an internal short circuit and the like, by forming a polymer layer containing a first polymer and a first inorganic oxide particle on a surface of the negative electrode active material layer.

However, for the method involving forming a polymer layer containing a first polymer and a first inorganic oxide particle on a surface of a negative electrode active material layer as proposed in Patent Document 1, it has been found that the storage capacity easily decreases after storage at a high temperature, and furthermore the increase in resistance after repeated charge and discharge of the secondary battery cannot be sufficiently suppressed.

Therefore, the present inventors have carried out extensive research into means for obtaining a secondary battery that is unlikely to decrease in storage capacity even after storage at a high temperature and that is unlikely to increase in resistance even after repeated charge and discharge, and found that it is possible to obtain an electrode that can provide a secondary battery that is unlikely to decrease even after storage at a high temperature and that is unlikely to increase in resistance even after repeated charge and discharge, by forming a polymer layer containing a copolymer containing a fluoromonomer unit and an amide bond-containing monomer unit and an inorganic particle on an electrode active material layer.

That is, the electrode of the present disclosure is an electrode including an electrode active material layer and a polymer layer formed on the electrode active material layer, and the polymer layer contains a copolymer containing a fluoromonomer unit and an amide bond-containing monomer unit and an inorganic particle, and thus by using the electrode according to the present disclosure as an electrode for a secondary battery, it is possible to obtain a secondary battery that is unlikely to decrease in storage capacity even after storage at a high temperature and that is unlikely to increase in resistance even after repeated charge and discharge.

Hereinafter, embodiments of the electrode of the present disclosure will be described in more detail.

The electrode of the present disclosure includes an electrode active material layer and a polymer layer formed on the electrode active material layer.

### (Polymer layer)

The polymer layer included in the electrode of the present disclosure contains a copolymer and an inorganic particle, and is formed on the electrode active material layer. As long as the polymer layer is formed on the electrode active material layer, the polymer layer may be formed directly on the electrode active material layer without interposing any other layer or may be formed on the electrode active material layer via an other layer, and the polymer layer is preferably formed directly on the electrode active material layer without interposing an other layer, from the viewpoint of being able to sufficiently obtain the effects of forming the polymer layer.

### (Copolymer)

The copolymer included in the polymer layer contains a fluoromonomer unit and an amide bond-containing monomer unit.

Examples of the fluoromonomer forming a fluoromonomer unit include (1) an olefin having a fluorine atom bonded to an sp² hybridized carbon atom, (2) a monomer represented by the general formula: CH₂=CX-COORf wherein X is Cl, H, or an alkyl group, and Rf is a fluoroalkyl group, (3) a monomer represented by the general formula: CH₂=CH-Rf wherein Rf is a fluoroalkyl group, and (4) a monomer represented by the general formula: CH₂=CH-ORf wherein Rf is a fluoroalkyl group.

Examples of the alkyl group include an alkyl group having 1 to 3 carbon atoms, and the alkyl group is preferably a methyl group.

The fluoroalkyl group is preferably a linear or branched fluoroalkyl group having 1 to 12 carbon atoms.

The fluoromonomer is preferably (1), and more preferably at least one selected from the group consisting of vinylidene fluoride, trifluoroethylene, tetrafluoroethylene, hexafluoropropylene, chlorotrifluoroethylene, monofluoroethylene, trifluorostyrene, and a fluoromonomer represented by the general formula: CX₂=CXRf¹ wherein X is independently H or F, at least one of X is F, and Rf¹ is a linear or branched fluoroalkyl group having 1 to 12 carbon atoms, from the viewpoint of being able to introduce a fluorine atom bonded to a carbon atom constituting the polymer main chain into the copolymer and thereby being able to further improve the performance of the secondary battery.

The fluoromonomer is further preferably at least one selected from the group consisting of tetrafluoroethylene, hexafluoropropylene, chlorotrifluoroethylene, and 2,3,3,3-tetrafluoropropene, and particularly preferably tetrafluoroethylene, from the viewpoint of being able to further improve the performance of the secondary battery.

The amide bond-containing monomer forming the amide bond-containing monomer unit contains an amide bond and a polymerizable vinyl group. The amide bond refers to a bond between a carbonyl group and a nitrogen atom. Examples of the polymerizable vinyl group include a vinyl group, an allyl group, a vinyl ether group, a vinyl ester group, and an acrylic group.

Examples of the amide bond-containing monomer include an N-vinyllactam compound such as N-vinyl-β-propiolactam, N-vinyl-2-pyrrolidone, N-vinyl-2-piperidone, or N-vinyl-heptolactam, an acyclic N-vinylamide compound such as N-vinylformamide or N-methyl-N-vinylacetamide, an acyclic N-allylamide compound such as N-allyl-N-methylformamide or allylurea, an N-allyllactam compound such as 1-(2-propenyl)-2-pyrrolidone, and an acrylamide compound such as (meth)acrylamide, N,N-dimethylacrylamide, or N-isopropylacrylamide.

In addition, examples of the amide bond-containing monomer also include
a compound represented by 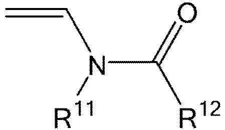
wherein R¹¹ and R¹² are each independently H or an alkyl group having 1 to 10 carbon atoms, and
a compound represented by 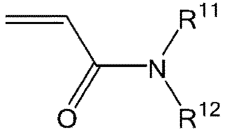
wherein R¹¹ and R¹² are each independently H or an alkyl group having 1 to 10 carbon atoms.

The amide bond-containing monomer is preferably a monomer having a lactam ring. The lactam ring is not limited as long as it is a ring formed by amide bond and carbon atoms, and the lactam ring may be monocyclic or polycyclic, and is preferably monocyclic. In addition, the lactam ring may have any substituent. Examples of the lactam ring include an α-lactam ring, a β-lactam ring, a γ-lactam ring, a δ-lactam ring, an ε-caprolactam ring, and an ω-heptalactam.

The amide bond-containing monomer can have a structure in which the remaining atomic group obtained by removing one or more hydrogen atoms bonded to a carbon atom or a nitrogen atom that forms a lactam ring is directly or indirectly bonded to a polymerizable vinyl group. For example, the amide bond-containing monomer can have a structure in which the remaining atomic group obtained by removing one or more hydrogen atoms bonded to a carbon atom or a nitrogen atom that forms a lactam ring is bonded to a vinyl group or an allyl group.

The amide bond-containing monomer is, among others, preferably at least one selected from the group consisting of N-vinyl-β-propiolactam, N-vinyl-2-pyrrolidone, N-vinyl-2-piperidone, N-vinyl-ε-caprolactam, and N-vinyl-heptolactam, more preferably at least one selected from the group consisting of N-vinyl-2-pyrrolidone, N-vinyl-2-piperidone, and N-vinyl-ε-caprolactam, and further preferably N-vinyl-2-pyrrolidone, from the viewpoint of being able to further improve the performance of the secondary battery.

The copolymer may contain an other monomer unit, in addition to a fluoromonomer unit and an amide bond-containing monomer unit. The other monomer is not limited as long as it is a monomer copolymerizable with a fluoromonomer and an amide bond-containing monomer. Examples of the other monomer unit include a vinyl ester monomer unit, a vinyl ether monomer unit, a (meth)acrylic monomer unit having polyethylene glycol in a side chain thereof, a vinyl monomer unit having polyethylene glycol in a side chain thereof, a (meth)acrylic monomer unit having a long-chain hydrocarbon group, and a vinyl monomer unit having a long-chain hydrocarbon group.

The content of the fluoromonomer unit in the copolymer is preferably 75 to 7 mol% based on all monomer units, and the content of the amide bond-containing monomer unit in the copolymer is preferably 25 to 93 mol% based on all monomer units, from the viewpoint of being able to further improve the performance of the secondary battery.

The content of the fluoromonomer unit in the copolymer is more preferably 60 mol% or less, further preferably 55 mol% or less, particularly preferably 50 mol% or less, and most preferably 45 mol% or less, and is more preferably 15 mol% or more, further preferably 20 mol% or more, particularly preferably 35 mol% or more, and most preferably 40 mol% or more.

The content of the amide bond-containing monomer unit in the copolymer is more preferably 40 mol% or more, further preferably 45 mol% or more, particularly preferably 50 mol% or more, and most preferably 55 mol% or more, and is more preferably 85 mol% or less, further preferably 80 mol% or less, particularly preferably 65 mol% or less, and most preferably 60 mol% or less.

The content of the other monomer unit in the copolymer is preferably 50 mol% or less, more preferably 35 mol% or less, further preferably 25 mol% or less, even further preferably 15 mol% or less, and particularly preferably 5 mol% or less, and is preferably 0 mol% or more.

In addition, in some embodiments, the copolymer may be a copolymer containing substantially only a fluoromonomer unit and an amide bond-containing monomer unit.

The formulation of the copolymer can be measured, for example, by ¹H-NMR and ¹⁹F-NMR.

The weight average molecular weight, in terms of polystyrene, of the copolymer is preferably 10,000 to 500,000, and is more preferably 15,000 or more, further preferably 20,000 or more, and particularly preferably 30,000 or more, and is more preferably 400,000 or less, from the viewpoint of being able to further improve the performance of the secondary battery. The weight average molecular weight can be measured by gel permeation chromatography (GPC) using dimethylformamide as a solvent.

### (Method for producing copolymer)

The copolymer can be suitably produced by a production method involving polymerizing a fluoromonomer, an amide bond-containing monomer, and, if necessary, an other monomer in a reactor.

Examples of the polymerization method that can be adopted include a method such as suspension polymerization, emulsion polymerization, or solution polymerization.

In addition, among various polymerization methods, a polymerization method using a fluorine-containing solvent is preferable from the viewpoint of being able to produce a copolymer having a high molecular weight. The copolymer can be suitably produced, for example, by a production method involving polymerizing at least a fluoromonomer and an amide bond-containing monomer in a fluorine-containing solvent to obtain a copolymer.

Examples of the fluorine-containing solvent include a hydrochlorofluoroalkane such as CH₃CClF₂, CH₃CCl₂F, CF₃CF₂CCl₂H, or CF₂ClCF₂CFHCl; a chlorofluoroalkane such as CF₂ClCFClCF₂CF₃ or CF₃CFClCFClCF₃; a perfluoroalkane such as perfluorocyclobutane, CF₃CF₂CF₂CF₃, CF₃CF₂CF₂CF₂CF₃, or CF₃CF₂CF₂CF₂CF₂CF₃; a hydrofluorocarbon such as CF₂HCF₂CF₂CF₂H, CF₃CFHCF₂CF₂CF₃, CF₃CF₂CF₂CF₂CF₂H, CF₃CF_{2C}FHCF₂CF₃, CF₃CFHCFHCF₂CF₃, CF₂HCF₂CF₂CF₂CF₂H, CF₂HCFHCF₂CF₂CF₃, CF₃CF₂CF₂CF₂CF₂CF₂H, CF₃CH(CF₃)CF₃CF_{2C}F₃, CF₃CF(CF₃)CFHCF₂CF₃, CF₃CF(CF₃)CFHCFHCF₃, CF₃CH(CF₃)CFHCF₂CF₃, CF₂HCF₂CF₂CF₂CF₂CF₂H, CF₃CF₂CF₂CF₂CH₂CH₃, or CF₃CH₂CF₂CH₃; a (perfluoroalkyl)alkyl ether such as F(CF₂)₄OCH₃, F(CF₂)₄OC₂H₅, (CF₃)₂CFOCH₃, or F(CF₂)₃OCH₃; and a hydrofluoroalkyl ether such as CF₃CH₂OCF₂CHF₂, CHF₂CF₂CH₂OCF₂CHF₂, or CF₃CF₂CH₂OCF₂CHF₂.

The fluorine-containing solvent is preferably at least one selected from the group consisting of a hydrofluorocarbon, a (perfluoroalkyl)alkyl ether, and a hydrofluoroalkyl ether, and more preferably a hydrofluoroalkyl ether, from the viewpoint of being able to produce a copolymer having a much higher molecular weight.

The fluorine-containing solvent is, among those, preferably at least one selected from the group consisting of CF₃CH₂CF₂CH₃, CF₃CH₂OCF₂CHF₂, CHF₂CF₂CH₂OCF₂CHF₂, and CF₃CF₂CH₂OCF₂CHF₂, and more preferably CF₃CH₂OCF₂CHF₂.

In the polymerization, a polymerization initiator, a surfactant and a chain transfer agent can be used, and may each be a conventionally known one.

The polymerization initiator may be a radical polymerization initiator. Representative examples of the polymerization initiator include
a dialkyl peroxycarbonate such as di-n-propyl peroxydicarbonate, diisopropyl peroxydicarbonate, or di-sec-butyl peroxydicarbonate;
a peroxyester such as t-butyl peroxyisobutyrate, t-butyl peroxypivalate, t-hexyl peroxy 2-ethylhexanoate, t-butyl peroxy-2-ethylhexanoate, 1,1,3,3-tetramethylbutyl peroxy-2-ethylhexanoate, or t-amyl peroxypivalate;
a dialkyl peroxide such as di-t-butyl peroxide; and
a di[fluoro(or fluorochloro)acyl] peroxide.

Examples of the di[fluoro(or fluorochloro)acyl] peroxide include a diacyl peroxide represented by [(RfCOO)-]₂ wherein Rf is a perfluoroalkyl group, an ω-hydroperfluoroalkyl group, or a fluorochloroalkyl group.

Examples of the di[fluoro(or fluorochloro)acyl] peroxide include di(ω)-hydro-dodecafluoroheptanoyl) peroxide, di(ω-hydro-tetradecafluorooctanoyl) peroxide, di(ω-hydro-hexadecafluorononanoyl) peroxide, di(perfluorobutyryl) peroxide, di(perfluoropaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorotriacontafluorodocosanoyl) peroxide.

By polymerization in the presence of a chain transfer agent, the solution viscosity, the weight average molecular weight, or the like of the resulting copolymer can be appropriately adjusted. Examples of the chain transfer agent include a hydrocarbon such as ethane, isopentane, n-hexane, or cyclohexane; an aromatic such as toluene or xylene; a ketone such as acetone; an acetate ester such as ethyl acetate or butyl acetate; an alcohol such as methanol or ethanol; a mercaptan such as methyl mercaptan; and a halogenated hydrocarbon such as carbon tetrachloride, chloroform, methylene chloride, or methyl chloride.

The polymerization temperature is not limited, and is preferably 0 to 95°C, and more preferably 15 to 95°C, from the viewpoint of the polymerization rate and the cost required for temperature control.

The polymerization pressure is not limited, and is preferably 0.3 to 1.5 MPaG, and is more preferably 0.4 MPaG or more, and is more preferably 1.0 MPaG or less, from the viewpoint of the polymerization rate and the pressure resistance of the reactor.

After completion of the polymerization, when the copolymer is obtained as a slurry, the polymer can be recovered by taking out the slurry from the reactor and washing and drying the slurry.

### (Inorganic particle)

The inorganic particle included in the polymer layer is preferably an inorganic particle containing at least one element selected from the group consisting of Mg, Al, Si, Ti, Zr, and Ba. The inorganic particle is preferably an inorganic particle excluding an electrode active material.

The inorganic particle is preferably at least one selected from the group consisting of a metal oxide particle and a metal hydroxide particle. In addition, the inorganic particle is more preferably a metal oxide particle containing at least one element selected from the group consisting of Mg, Al, Si, Ti, Zr, and Ba.

The metal oxide particle is preferably a particle of at least one selected from the group consisting of MgO, Al₂O₃, SiO₂, TiO₂, ZrO₂, and BaO.

The metal hydroxide particle is preferably a particle of at least one selected from the group consisting of Mg(OH)₂, Al(OH)₃, and Zr(OH)₄.

The inorganic particle is, among those, preferably a particle of at least one selected from the group consisting of MgO, Al₂O₃, SiO₂, and ZrO₂, and more preferably a particle of Al₂O₃.

The average particle size of the inorganic particle is preferably 25 µm or less, more preferably 10 µm or less, further preferably 5 µm or less, particularly preferably 1 µm or less, and preferably 0.02 µm or more. The average particle size of the inorganic particle is a value obtained by measurement using a transmission electron microscope, a laser type particle size distribution measurement apparatus, or the like.

In the polymer layer, the content proportion of the copolymer to the inorganic particle [(copolymer)/(inorganic particle)] in terms of mass ratio is preferably 0.1/99.9 to 49.9/50.1, and is more preferably 1/99 or more, further preferably 5/95 or more, and particularly preferably 10/90 or more, and is more preferably 45/55 or less, and further preferably 40/60 or less.

### (Method for forming polymer layer)

The polymer layer can be formed, for example, by preparing a composition containing a copolymer and an inorganic particle and coating the electrode active material layer with the composition.

The coating method is not limited as long as it is a method that can cover a surface of an electrode active material layer with a polymer layer formed from a composition, and examples thereof include a method involving coating an electrode active material layer with the composition and drying the resulting coating film. More specific examples of the coating method include a method involving roll coating an electrode active material layer with the composition, a method involving dipping an electrode active material layer in the composition, and a method involving applying the composition onto an electrode active material layer and immersing the electrode active material layer in an appropriate coagulating liquid for creation. In addition, a film may be created by using the composition and the obtained film and an electrode active material layer may be laminated by a method such as lamination. Examples of a method for creating a film by using the composition include a method involving casting the composition onto a film having a smooth surface such as a polyester film or an aluminum film and then peeling off the film.

The composition containing a copolymer and an inorganic particle preferably further contains a solvent.

Examples of the solvent include water; a nitrogen-containing organic solvent such as N-methyl-2-pyrrolidone, N,N-dimethylacetamide, or dimethylformamide; a ketone-based solvent such as acetone, methyl ethyl ketone, cyclohexanone, or methyl isobutyl ketone; an ester-based solvent such as ethyl acetate or butyl acetate; an ether-based solvent such as tetrahydrofuran, dioxane, ethyl cellosolve, methyl cellosolve, diglyme, or triglyme; an aromatic hydrocarbon-based solvent such as xylene, toluene, or solvent naphtha; an aliphatic hydrocarbon-based solvent such as n-pentane, n-hexane, n-heptane, n-octane, n-nonane, n-decane, n-undecane, n-dodecane, or mineral spirit; a fluorine-containing solvent such as CF₃CH₂CF₂CH₃, CF₃CH₂OCF₂CHF₂, CHF₂CF₂CH₂OCF₂CHF₂, or CF₃CF₂CH₂OCF₂CHF₂; and mixed solvents thereof.

### (Electrode active material layer)

The electrode active material layer can contain an electrode active material and a binder. The electrode of the present disclosure can be used as a positive electrode or as a negative electrode. Therefore, the electrode active material may be a positive electrode active material in some embodiments or a negative electrode active material in other embodiments. In addition, the positive electrode can include a positive electrode active material layer containing a positive electrode active material and a binder, and a polymer layer formed on the positive electrode active material layer. The negative electrode can include a negative electrode active material layer containing a negative electrode active material and a binder, and a polymer layer formed on the negative electrode active material layer.

The electrode usually includes a current collector, and the electrode active material layer is formed on the current collector. The electrode active material layer may be formed on one side or each of both sides of the current collector. When an electrode active material layer is formed on each of both sides of the current collector, a polymer layer may be formed only on the electrode active material layer on one side, or a polymer layer may be formed on the electrode active material layer on each of both sides.

Hereinafter, embodiments of the positive electrode and the negative electrode will be described in more detail.

### (Positive electrode)

The positive electrode includes a positive electrode active material layer containing a positive electrode active material and a binder, and a polymer layer formed on the positive electrode active material layer. It is possible to obtain a secondary battery that is unlikely to decrease in storage capacity even after storage at a high temperature and that is unlikely to increase in resistance even after repeated charge and discharge, by forming a polymer layer containing a copolymer containing a fluoromonomer unit and an amide bond-containing monomer unit and an inorganic particle on the positive electrode active material layer.

### (Positive electrode active material)

The positive electrode active material is not limited as long as it can electrochemically absorb and desorb a lithium ion.

The positive electrode active material is preferably a positive electrode active material containing at least one alkali metal selected from the group consisting of Li, Na, and K, and more preferably a positive electrode active material containing at least one alkali metal selected from the group consisting of Li, Na, and K, and at least one metal selected from the group consisting of Fe, Ni, Mn, Cu, Zn, Al, Sn, Cr, V, Ti, Mg, Ca, Sr, B, Ga, In, Si, and Ge.

The positive electrode active material is, among others, preferably a material containing lithium and at least one transition metal, such as a lithium transition metal composite oxide or a lithium-containing transition metal phosphate compound.

Preferable examples of the transition metal of the lithium transition metal composite oxide include V, Ti, Cr, Mn, Fe, Co, Ni, and Cu, and specific examples of the lithium transition metal composite oxide include a lithium-cobalt composite oxide such as LiCoO₂, a lithium-nickel composite oxide such as LiNiO₂, a lithium-manganese composite oxide such as LiMnO₂, LiMn₂O₄, or Li₂MnO₃, and compounds obtained by replacement of a part of the transition metal atoms mainly constituting these lithium transition metal composite oxides with another metal such as Al, Ti, V, Cr, Mn, Fe, Co, Li, Ni, Cu, Zn, Mg, Ga, Zr, or Si. Examples of the compounds obtained by replacement include a lithium-nickel-manganese composite oxide, a lithium-nickel-cobalt-aluminum composite oxide, a lithium-nickel-cobalt-manganese composite oxide, a lithium-manganese-aluminum composite oxide, and a lithium-titanium composite oxide, and more specific examples include LiNi_{0.5}Mn_{0.5}O₂, LiNi_{0.85}Co_{0.10}Al_{0.05}O₂, LiNi_{0.33}CO_{0.33}Mn_{0.33}O₂, LiNi_{0.5}Mn_{0.3}CO_{0.2}O₂, LiNi_{0.6}Mn_{0.2}CO_{0.2}O₂, LiNi_{0.8}Mn_{0.1}Co_{0.1}O₂, LiMn_{1.8}Al_{0.2}O₄, LiMn_{1.5}Ni_{0.5}O₄, Li₄Ti₅O₁₂, and LiNi_{0.82}CO_{0.15}Al_{0.03}O₂.

Preferable examples of the transition metal of the lithium-containing transition metal phosphate compound include V, Ti, Cr, Mn, Fe, Co, Ni, and Cu, and specific examples of the lithium-containing transition metal phosphate compound include an iron phosphate compound such as LiFePO₄, Li₃Fe₂(PO₄)₃, or LiFeP₂O₇, a cobalt phosphate compound such as LiCoPO₄, and compounds obtained by replacement of a part of the transition metal atoms mainly constituting these lithium transition metal phosphate compounds with another metal such as Al, Ti, V, Cr, Mn, Fe, Co, Li, Ni, Cu, Zn, Mg, Ga, Zr, Nb, or Si.

In particular, LiCoO₂, LiNiO₂, LiMn₂O₄, LiNi_{0.82}Co_{0.15}Al_{0.03}O₂, LiNi_{0.33}Mn_{0.33}CO_{0.33}O₂, LiNi_{0.5}Mn_{0.3}CO_{0.2}O₂, LiNi_{0.6}Mn_{0.2}Co_{0.2}O₂, LiNi_{0.8}Mn_{0.1}Co_{0.1}O₂, and LiFePO₄ are preferable from the viewpoint of high voltage, high energy density, charge/discharge cycle characteristics, or the like.

### (Binder)

The binder may be a polymer, excluding a copolymer containing a fluoromonomer unit and an amide bond-containing monomer unit.

The binder may be any material as long as the material is safe against the solvent and the electrolyte that are used when producing an electrode, and examples thereof include polyvinylidene fluoride, polytetrafluoroethylene, a vinylidene fluoride-tetrafluoroethylene copolymer, a vinylidene fluoride-hexafluoropropylene copolymer, a vinylidene fluoride-tetrafluoroethylene-hexafluoropropylene copolymer, polyethylene, polypropylene, styrene-butadiene elastomer, isoprene elastomer, butadiene elastomer, an ethylene-acrylic acid copolymer, and an ethylene-methacrylic acid copolymer.

### (Conductive material)

The positive electrode active material layer can further contain a conductive material. Examples of the conductive material include a carbon material such as graphite, carbon black, a carbon nanotube, a carbon fiber, or acetylene black.

The content of each component in the positive electrode active material layer is as follows: when the mass of the electrode active material layer is 100% by mass, the content of the positive electrode active material is preferably 80.0 to 99.8% by mass, the content of the conductive material is preferably 0.1 to 10.0% by mass, and the content of the binder is preferably 0.1 to 10.0% by mass.

The positive electrode usually further includes a positive electrode current collector, and a positive electrode active material layer is formed on the positive electrode current collector. The positive electrode active material layer may be formed on one side or each of both sides of the positive electrode current collector. When a positive electrode active material layer is formed on each of both sides of the positive electrode current collector, a polymer layer may be formed only on the positive electrode active material layer on one side, or a polymer layer may be formed on the positive electrode active material layer on each of both sides.

Examples of a material for the positive electrode current collector include a metal such as aluminum, titanium, or tantalum, and an alloy thereof. Among these, aluminum or an alloy thereof is preferable.

The positive electrode active material layer may be formed according to a conventional method. Examples thereof include a method involving adding a binder, a thickener, a conductive material, a solvent, or the like to the positive electrode active material to form a slurry-like positive electrode mixture, applying the mixture to a current collector, drying the mixture, and then pressing the mixture to achieve high density.

Examples of the thickener include carboxymethylcellulose, methylcellulose, hydroxymethylcellulose, ethylcellulose, polyvinyl alcohol, oxidized starch, phosphorylated starch, and casein.

Examples of the solvent for the positive electrode mixture include the same solvents as those that can be contained in a composition for forming a polymer layer.

### (Negative electrode)

The negative electrode includes a negative electrode active material layer containing a negative electrode active material and a binder, and a polymer layer formed on the negative electrode active material layer. It is possible to obtain a secondary battery that is unlikely to decrease in storage capacity even after storage at a high temperature and that is unlikely to increase in resistance even after repeated charge and discharge, by forming a polymer layer containing a copolymer containing a fluoromonomer unit and an amide bond-containing monomer unit and an inorganic particle on the negative electrode active material layer.

### (Negative electrode active material)

Examples of the negative electrode active material include a carbonaceous material that can absorb and desorb a lithium ion, such as a pyrolysate of an organic substance under various pyrolysis conditions, artificial graphite, or natural graphite; a metal oxide material that can absorb and desorb a lithium ion, such as tin oxide or silicon oxide; a lithium metal; and various lithium alloys. Two or more of these negative electrode active materials may be mixed and used.

The negative electrode active material is preferably a negative electrode active material containing a carbonaceous material, or a negative electrode active material containing a compound containing at least one element selected from the group consisting of Si, Sn, V, Nb, and Ti.

Examples of the compound containing at least one element selected from the group consisting of Si, Sn, V, Nb, and Ti include a lithium alloy containing at least one element selected from the group consisting of Si, Sn, V, Nb, and Ti and lithium, and a metal oxide compound containing at least one element selected from the group consisting of Si, Sn, V, Nb, and Ti.

From the viewpoint of a good balance between the initial irreversible capacity and the high current density charge/discharge characteristics, the carbonaceous material is preferably selected from:
(1) natural graphite;
(2) an artificial carbonaceous substance and an artificial graphite substance; and a carbonaceous material obtained by one or more times of heat treatment in the range of 400 to 3,200°C of a carbonaceous substance {for example, coal-based coke, petroleum-based coke, coal-based pitch, petroleum-based pitch, or a material obtained by oxidation treatment of any of these pitches; needle coke, pitch coke, or a carbon material obtained by partial graphitization of any of these cokes; a pyrolysate of an organic substance such as furnace black, acetylene black, or pitch-based carbon fiber; a carbonizable organic substance (for example, coal tar pitches from soft pitch to hard pitch; a coal-based heavy oil such as dry distillation/liquefaction oil; a straight-run heavy oil such as atmospheric residue or vacuum residue; a cracking-derived petroleum heavy oil such as ethylene tar as a byproduct generated in thermal cracking of crude oil, naphtha, or the like; further, an aromatic hydrocarbon such as acenaphthylene, decacyclene, anthracene, or phenanthrene; a **N-**ring compound such as phenazine or acridine; a S-ring compound such as thiophene or bithiophene; a polyphenylene such as biphenyl or terphenyl; polyvinyl chloride, polyvinyl alcohol, polyvinyl butyral, or a material obtained by insolubilizing any thereof; a nitrogen-containing organic polymer such as polyacrylonitrile or polypyrrole; a sulfur-containing organic polymer such as polythiophene or polystyrene; a natural polymer such as a polysaccharide typified by cellulose, lignin, mannan, polygalacturonic acid, chitosan, or saccharose; a thermoplastic resin such as polyphenylene sulfide or polyphenylene oxide; a thermosetting resin such as a furfuryl alcohol resin, a phenolformaldehyde resin, or an imide resin) and a carbide of any of these; and a solution obtained by dissolving a carbonizable organic substance in a low-molecular-weight organic solvent such as benzene, toluene, xylene, quinoline, or n-hexane, and a carbide thereof};
(3) a carbonaceous material in which the negative electrode active material layer is composed of at least two or more carbonaceous substances having different crystallinities and/or has an interface at which the carbonaceous substances having different crystallinities are in contact with each other; and
(4) a carbonaceous material in which the negative electrode active material layer is composed of at least two or more carbonaceous substances having different orientations and/or has an interface at which the carbonaceous substances having different orientations are in contact with each other.

### (Binder)

The binder may be a polymer, excluding a copolymer containing a fluoromonomer unit and an amide bond-containing monomer unit. Examples of the binder include the same binders as those that can be contained in the positive electrode active material layer.

The content of each component in the negative electrode active material layer is as follows: when the mass of the negative electrode active material layer is 100% by mass, the content of the negative electrode active material is preferably 99.9 to 80.0% by mass, and the content of the binder is preferably 0.1 to 20.0% by mass.

The negative electrode usually further includes a negative electrode current collector, and a negative electrode active material layer is formed on the negative electrode current collector. The negative electrode active material layer may be formed on one side or each of both sides of the negative electrode current collector. When a negative electrode active material layer is formed on each of both sides of the negative electrode current collector, a polymer layer may be formed only on the negative electrode active material layer on one side, or a polymer layer may be formed on the negative electrode active material layer on each of both sides.

Examples of a material for a negative electrode current collector include copper, nickel, and stainless steel. Among these, copper is preferable from the viewpoint of ease of processing into a thin film and the cost.

The negative electrode active material layer may be formed according to a conventional method. Examples thereof include a method involving adding a binder, a thickener, a conductive material, a solvent, or the like to the negative electrode active material to form a slurry-like negative electrode mixture, applying the mixture to a current collector, drying the mixture, and then pressing the mixture to achieve high density.

Examples of the thickener include the same thickeners as those that can be used to form a positive electrode active material layer.

Examples of the conductive material for a negative electrode include a metal material such as copper or nickel; and a carbon material such as graphite or carbon black.

Examples of the solvent for the negative electrode mixture include the same solvents as those that can be contained in a composition for forming a polymer layer.

### (Application of electrode)

The electrode of the present disclosure can be used in an electrochemical device. Examples of the electrochemical device include a battery such as a secondary battery or a capacitor. The battery may be a primary battery in some embodiments, and may be a storage battery (secondary battery) or an energy storage element in other embodiments. In some embodiments, the battery may be a non-aqueous electrolyte battery. The non-aqueous electrolyte battery includes all batteries including an electrolyte and a power generation element. Examples of the non-aqueous electrolyte battery include a lithium ion primary battery, a lithium ion secondary battery, a nickel hydrogen battery, a lithium ion capacitor, and an electric double layer capacitor.

### (Secondary battery)

The electrode of the present disclosure can be particularly suitably used as an electrode of a secondary battery. The secondary battery is, among others, particularly preferably a lithium ion secondary battery.

The secondary battery may be any form of a secondary battery including a positive electrode, a negative electrode, and a non-aqueous electrolyte, and including the electrode of the present disclosure as the positive electrode, a secondary battery including a positive electrode, a negative electrode, and a non-aqueous electrolyte, and including the electrode of the present disclosure as the negative electrode, and
a secondary battery including a positive electrode, a negative electrode, and a non-aqueous electrolyte, and including the electrode of the present disclosure as the positive electrode, and including the electrode of the present disclosure as the negative electrode.

The non-aqueous electrolyte may be a solution obtained by dissolving a known electrolyte salt in a known organic solvent for electrolyte salt dissolution.

The organic solvent for electrolyte salt dissolution is not limited, and may be one or two or more of a hydrocarbon-based solvent such as propylene carbonate, ethylene carbonate, butylene carbonate, γ-butyl lactone, 1,2-dimethoxyethane, 1,2-diethoxyethane, dimethyl carbonate, diethyl carbonate, ethyl methyl carbonate, or vinylene carbonate; and a fluorine-based solvent such as fluoroethylene carbonate, fluoroether, or fluorinated carbonate. Any conventionally known electrolyte can also be used, and LiClO₄, LiAsF₆, LiPF₆, LiBF₄, LiCl, LiBr, CH₃SO₃Li, CF₃SO₃Li, cesium carbonate, or the like can be used.

The secondary battery may have any shape, and examples thereof include a shape such as a cylindrical shape, a square shape, a laminated shape, a coin shape, or a large-sized shape. The shapes and the configurations of a positive electrode, a negative electrode, and a separator can be changed according to the shape of each battery and used.

The embodiments have been described above, and it will be understood that various modifications of the embodiments and details are possible without departing from the spirit and scope of the claims.
<1> According to a first aspect of the present disclosure, provided is an electrode comprising an electrode active material layer and a polymer layer formed on the electrode active material layer, wherein the polymer layer comprises a copolymer comprising a fluoromonomer unit and an amide bond-containing monomer unit, and an inorganic particle.
<2> According to a second aspect of the present disclosure, provided is
   the electrode according to the first aspect, wherein the fluoromonomer is at least one selected from the group consisting of tetrafluoroethylene, hexafluoropropylene, chlorotrifluoroethylene, and 2,3,3,3-tetrafluoropropene.
<3> According to a third aspect of the present disclosure, provided is
   the electrode according to the first or second aspect, wherein the amide bond-containing monomer comprises a lactam ring.
<4> According to a fourth aspect of the present disclosure, provided is
   the electrode according to any one of the first to third aspects, wherein the amide bond-containing monomer is N-vinyl-2-pyrrolidone.
<5> According to a fifth aspect of the present disclosure, provided is
   the electrode according to any one of the first to fourth aspects, wherein a content of the fluoromonomer unit in the copolymer is 75 to 7 mol% based on all monomer units, and a content of the amide bond-containing monomer unit in the copolymer is 25 to 93 mol% based on all monomer units.
<6> According to a sixth aspect of the present disclosure, provided is
   the electrode according to any one of the first to fifth aspects, wherein the inorganic particle comprises at least one element selected from the group consisting of Mg, Al, Si, Ti, Zr, and Ba.
<7> According to a seventh aspect of the present disclosure, provided is
   the electrode according to any one of the first to sixth aspects, wherein a content proportion of the copolymer to the inorganic particle [(copolymer)/(inorganic particle)] in terms of mass ratio is 0.1/99.9 to 49.9/50.1.
<8> According to an eighth aspect of the present disclosure, provided is
   the electrode according to any one of the first to seventh aspects, wherein the electrode active material layer comprises an electrode active material and a binder, and the binder comprises a polymer, excluding the copolymer containing the fluoromonomer unit and the amide bond-containing monomer unit.
<9> According to a ninth aspect of the present disclosure, provided is
   the electrode according to the eighth aspect, wherein the electrode active material is a positive electrode active material.
<10> According to a tenth aspect of the present disclosure, provided is
   the electrode according to the ninth aspect, wherein the positive electrode active material is a positive electrode active material comprising at least one alkali metal selected from the group consisting of Li, Na, and K.
<11> According to an eleventh aspect of the present disclosure, provided is
   the electrode according to the ninth or tenth aspect, wherein the positive electrode active material is a positive electrode active material comprising at least one alkali metal selected from the group consisting of Li, Na, and K, and at least one metal selected from the group consisting of Fe, Ni, Mn, Cu, Zn, Al, Sn, Cr, V, Ti, Mg, Ca, Sr, B, Ga, In, Si, and Ge.
<12> According to a twelfth aspect of the present disclosure, provided is
   the electrode according to any one of the ninth to eleventh aspects, wherein the electrode active material layer further comprises a conductive material.
<13> According to a thirteenth aspect of the present disclosure, provided is
   the electrode according to the twelfth aspect, wherein when a mass of the electrode active material layer is 100% by mass,
   a content of the positive electrode active material is 80.0 to 99.8% by mass,
   a content of the conductive material is 0.1 to 10.0% by mass, and
   a content of the binder is 0.1 to 10.0% by mass.
<14> According to a fourteenth aspect of the present disclosure, provided is
   the electrode according to the eighth aspect, wherein the electrode active material is a negative electrode active material.
<15> According to a fifteenth aspect of the present disclosure, provided is
   the electrode according to the fourteenth aspect, wherein the negative electrode active material is a negative electrode active material comprising a carbonaceous material, or a negative electrode active material comprising a compound comprising at least one element selected from the group consisting of Si, Sn, V, Nb, and Ti.
<16> According to a sixteenth aspect of the present disclosure, provided is
   the electrode according to the fourteenth or fifteenth aspect, wherein
   when a mass of the electrode active material layer is 100% by mass,
   a content of the negative electrode active material is 99.9 to 80.0% by mass, and
   a content of the binder is 0.1 to 20.0% by mass.
<17> According to a seventeenth aspect of the present disclosure, provided is
   the electrode according to any one of the first to sixteenth aspects, wherein the electrode is used in an electrochemical device.
<18> According to an eighteenth aspect of the present disclosure, provided is
   a secondary battery comprising the electrode according to any one of the first to seventeenth aspects.

### EXAMPLES

Next, the embodiments of the present disclosure will be described with reference to Examples, but the present disclosure is not limited only to the Examples.

The numerical values in the Examples were measured by the following methods.

### <Monomer formulation of polymer>

The monomer formulation of a polymer was measured in the state of a deuterated chloroform solution of the polymer by ¹H-NMR and ^{19F}-NMR measurements by using an NMR analyzer (manufactured by Agilent Technologies, VNS 400 MHz).

### <Weight average molecular weight>

The weight average molecular weight was measured by gel permeation chromatography (GPC). The weight average molecular weight was calculated from data (reference: polystyrene) obtained by measurement under a flow of dimethylformamide (DMF) as a solvent at a flow rate of 1.0 ml/min by using AS-8010, CO-8020, and columns (three GMHHR-H connected in series) manufactured by Tosoh Corporation and RID-10A manufactured by Shimadzu Corporation.

In the Examples and the Comparative Examples, the following polymers and inorganic particles were used.

### (Copolymers)

- Copolymer a (formulation ratio: tetrafluoroethylene (TFE)/N-vinyl-2-pyrrolidone (VP) = 41/59, weight average molecular weight: 320,000)
- Copolymer b (formulation ratio: TFE/VP = 38/62, weight average molecular weight: 240,000)
- Copolymer c (formulation ratio: TFE/VP = 33/67, weight average molecular weight: 97,000)
- Copolymer d (formulation ratio: vinylidene fluoride (VdF)/hexafluoropropylene (HFP) = 93/7, weight average molecular weight: 320,000)

### (Inorganic particles)

- Inorganic particle X: Aluminum oxide (particle size: 0.7 µm)
- Inorganic particle Y: Silicon dioxide (particle size: 0.6 µm)
- Inorganic particle Z: Zirconium dioxide (particle size: 0.4 µm)
- Inorganic particle W: Magnesium oxide (particle size: 0.6 µm)

### Examples 1 to 7 and Comparative Examples 1 and 2 <Preparation of electrolyte>

Ethylene carbonate, which is a high dielectric constant solvent, and ethyl methyl carbonate and dimethyl carbonate, which are low viscosity solvents, were mixed at a volume ratio of 30:30:40, and LiPF₆ was added to the resulting mixture at a concentration of 1.1 mol/liter to obtain a non-aqueous electrolyte.

### <Creation of positive electrode>

90 parts by mass of Li (Ni_{1/3}Mn_{1/3}Co_{1/3})O₂ as a positive electrode active material, 5 parts by mass of acetylene black as a conductive material, and 5 parts by mass of polyvinylidene fluoride (PVdF) as a binder were mixed in an N-methylpyrrolidone solvent to form a slurry. The obtained slurry was applied to one side of an aluminum foil having a thickness of 15 µm coated with a conductive aid in advance, dried, and roll pressed by using a press, and this workpiece was cut out into a shape having an active material layer having a size having a width of 50 mm and a length of 30 mm and an uncoated portion having a width of 5 mm and a length of 9 mm to obtain a positive electrode.

### <Creation of negative electrode>

1 Part by mass of an aqueous dispersion of carboxymethyl cellulose sodium (concentration of carboxymethyl cellulose sodium of 1% by mass) and 1 part by mass of an aqueous dispersion of a styrene-butadiene elastomer (concentration of styrene-butadiene elastomer of 50% by mass) as a thickener and a binder were added to 98 parts by mass of a carbonaceous material (graphite), and these were mixed by using a disperser to form a slurry. The obtained slurry was applied to one side of a copper foil having a thickness of 10 µm, dried, and rolled by using a press, and this workpiece was cut out into a shape having an active material layer having a size having a width of 52 mm and a length of 32 mm and an uncoated portion having a width of 5 mm and a length of 9 mm to obtain a negative electrode.

The positive electrode obtained above was treated with a composition containing the copolymer and the inorganic particle as follows. However, in Comparative Example 2, the positive electrode obtained above was used as it was without carrying out the following treatment.

### <Coating treatment (Dip method)>

The copolymer and the inorganic particle were mixed in the component ratio shown in Table 1, then the resulting mixture was mixed with HFE-347pc-f (CF₃CH₂OCF₂CHF₂) to prepare a composition having a solid concentration of 10% by mass. The positive electrode obtained above was dipped in the composition for 1 minute, and then the dipped product was recovered from the composition. The obtained dipped product was cleaned with HFE-347pc-f to clean away an attachment attached to the surface of the dipped product, and then the cleaned dipped product was dried to obtain a positive electrode including a polymer layer formed on the positive electrode active material layer. It was confirmed by scanning electron microscopy (SEM) or by measuring the thickness and the weight that a polymer layer was formed on the active material layer.

### <Creation of aluminum laminated cell>

The positive electrode including a polymer layer (the positive electrode not including a polymer layer in Comparative Example 2) and the negative electrode were opposed to each other via a microporous polyethylene film (separator) having a thickness of 20 µm, the non-aqueous electrolyte obtained above was injected, the non-aqueous electrolyte was caused to sufficiently permeate into the separator and the like, and then the workpiece was sealed, precharged, and aged to create a lithium ion secondary battery (aluminum laminated cell).

### <Measurement of battery characteristics>

The resistance increase rate of the obtained aluminum laminated cell after a high temperature storage test and a low temperature cycle test was measured as described below.

### <High temperature storage test>

At 25°C, the battery was charged to 4.35 V at a constant current corresponding to 0.2 C, and then discharged to 3.0 V at a constant current of 0.2 C. 2 cycles of this operation were carried out to stabilize the battery, and in the third cycle, the battery was charged to 4.35 V at a constant current of 0.2 C, then charged at a constant voltage of 4.35 V until the current value was 0.05 C, and discharged to 3.0 V at a constant current of 0.2 C to determine the initial discharge capacity. After that, the battery was charged to 4.35 V at a constant current of 0.2 C, and then charged at a constant voltage of 4.35 V until the current value was 0.05 C to carry out a storage test.

Here, 1 C represents a current value for discharging the reference capacity of a battery in 1 hour, 5 C represents a current value 5 times that current value, 0.1 C represents a current value of 1/10 thereof, and 0.2 C represents a current value of 1/5 thereof.

The secondary battery in a charged state for which the initial characteristic evaluation was completed was stored at a high temperature under conditions of 60°C and 672 hours. The battery was sufficiently cooled, and then at 25°C, the battery was charged to 3 V at 0.5 C, thereafter charged to 4.35 V at a constant current of 0.2 C, then charged at a constant voltage of 4.35 V until the current value was 0.05 C, and discharged to 3.0 V at a constant current of 0.2 C to determine the storage capacity.

The capacity retention rate (%) was determined based on the following expression. Capacity retention rate (%) = (storage capacity)/(initial discharge capacity) × 100

### <Measurement of resistance increase rate after low temperature cycle test>

At 25°C, the battery was charged to 4.2 V at a constant current corresponding to 0.2 C, and then discharged to 3.0 V at a constant current of 0.2 C. 2 cycles of this operation were carried out to stabilize the battery. After that, in an environment of -5°C, the secondary battery produced above was charged to 4.2 V at a constant current of 0.2 C, then charged at a constant voltage of 4.2 V until the current value was 0.05 C, and discharged to 3.0 V at a constant current of 0.2 C to determine the initial discharge capacity. A 200 cycle test was carried out by carrying out charge and discharge in the same manner.

The resistance of the battery at the time of calculating the initial discharge capacity stabilized as described above and the resistance thereof after the cycle test were measured. The measurement temperature was -10°C. The resistance increase rate after the low temperature cycle test was determined based on the following expression. Resistance increase rate (%) = resistance (Ω) after 200 cycles/resistance (Ω) after calculating initial discharge capacity × 100

Results are shown in Table 1.

### [Table 1]

**Table 1**

| | Copolymer | Inorganic particle | Component ratio (% by mass) | | Coated electrode | Capacity retention rate (%) | Resistance increase rate (%) |
|---|---|---|---|---|---|---|---|
| | | | Copolymer | inorganic particle | | | |
| Example 1 | a | X | 5 | 95 | Positive electrode | 82 | 164 |
| Example 2 | a | X | 10 | 90 | Positive electrode | 86 | 147 |
| Example 3 | a | X | 20 | 80 | Positive electrode | 91 | 140 |
| Example 4 | a | X | 40 | 60 | Positive electrode | 90 | 148 |
| Example 5 | b | Y | 30 | 70 | Positive electrode | 88 | 143 |
| Example 6 | c | Z | 25 | 75 | Positive electrode | 87 | 160 |
| Example 7 | b | W | 35 | 65 | Positive electrode | 86 | 145 |
| Comparative Example 1 | d | X | 20 | 80 | Positive electrode | 57 | 211 |
| Comparative Example 2 | - | - | - | - | - | 53 | 218 |

### Examples 8 to 14 and Comparative Examples 3 and 4 <Preparation of electrolyte>

Ethylene carbonate and monofluoroethylene carbonate, which are high dielectric constant solvents, and ethyl methyl carbonate, which is a low viscosity solvent, were mixed at a volume ratio of 30:5:65, and LiPF₆ was added to the resulting mixture at a concentration of 1.0 mol/liter to obtain a non-aqueous electrolyte.

### <Creation of positive electrode>

90% by mass of LiMn₂O₄ as a positive electrode active material, 5% by mass of acetylene black as a conductive material, and 5% by mass of polyvinylidene fluoride (PVdF) as a binder were mixed in an N-methylpyrrolidone solvent to form a slurry. The obtained slurry was applied to one side of an aluminum foil having a thickness of 15 µm coated with a conductive aid in advance, dried, and roll pressed by using a press, and this workpiece was cut out into a shape having an active material layer having a size having a width of 50 mm and a length of 30 mm and an uncoated portion having a width of 5 mm and a length of 9 mm to obtain a positive electrode.

### <Creation of negative electrode>

1 Part by mass of an aqueous dispersion of carboxymethyl cellulose sodium (concentration of carboxymethyl cellulose sodium of 1% by mass) and 1 part by mass of an aqueous dispersion of a styrene-butadiene elastomer (concentration of styrene-butadiene elastomer of 50% by mass) as a thickener and a binder were added to 98 parts by mass of artificial graphite, and these were mixed by using a disperser to form a slurry. The obtained slurry was applied to one side of a copper foil having a thickness of 10 µm, dried, and rolled by using a press, and this workpiece was cut out into a shape having an active material layer having a size having a width of 52 mm and a length of 32 mm and an uncoated portion having a width of 5 mm and a length of 9 mm to obtain a negative electrode.

The negative electrode obtained above was treated with a composition containing the copolymer and the inorganic particle as follows. However, in Comparative Example 4, the negative electrode obtained above was used as it was without carrying out the following treatment.

### <Coating treatment (Dip method)>

The copolymer and the inorganic particle were mixed in the component ratio shown in Table 2, then the resulting mixture was mixed with HFE-347pc-f (CF₃CH₂OCF₂CHF₂) to prepare a composition having a solid concentration of 10% by mass. The negative electrode obtained above was dipped in the composition for 1 minute, and then the dipped product was recovered from the composition. The obtained dipped product was cleaned with HFE-347pc-f to clean away an attachment attached to the surface of the dipped product, and then the cleaned dipped product was dried to obtain a negative electrode including a polymer layer formed on the negative electrode active material layer. It was confirmed by scanning electron microscopy (SEM) or by measuring the thickness and the weight that a polymer layer was formed on the active material layer.

### <Creation of aluminum laminated cell>

The positive electrode and the negative electrode including a polymer layer (the negative electrode not including a polymer layer in Comparative Example 4) described above were opposed to each other via a microporous polyethylene film (separator) having a thickness of 20 µm, the non-aqueous electrolyte obtained above was injected, the non-aqueous electrolyte was caused to sufficiently permeate into the separator and the like, and then the workpiece was sealed, precharged, and aged to create a lithium ion secondary battery (aluminum laminated cell).

### <Measurement of battery characteristics>

The resistance increase rate of the obtained aluminum laminated cell after a high temperature storage test and a low temperature cycle test was measured as described below.

### <High temperature storage test>

At 25°C, the battery was charged to 4.35 V at a constant current corresponding to 0.2 C, and then discharged to 3.0 V at a constant current of 0.2 C. 2 cycles of this operation were carried out to stabilize the battery, and in the third cycle, the battery was charged to 4.35 V at a constant current of 0.2 C, then charged at a constant voltage of 4.35 V until the current value was 0.05 C, and discharged to 3.0 V at a constant current of 0.2 C to determine the initial discharge capacity. After that, the battery was charged to 4.35 V at a constant current of 0.2 C, and then charged at a constant voltage of 4.35 V until the current value was 0.05 C to carry out a storage test.

Here, 1 C represents a current value for discharging the reference capacity of a battery in 1 hour, 5 C represents a current value 5 times that current value, 0.1 C represents a current value of 1/10 thereof, and 0.2 C represents a current value of 1/5 thereof.

The secondary battery in a charged state for which the initial characteristic evaluation was completed was stored at a high temperature under conditions of 75°C and 528 hours. The battery was sufficiently cooled, and then at 25°C, the battery was charged to 3 V at 0.5 C, thereafter charged to 4.35 V at a constant current of 0.2 C, then charged at a constant voltage of 4.35 V until the current value was 0.05 C, and discharged to 3.0 V at a constant current of 0.2 C to determine the storage capacity.

The capacity retention rate (%) was determined based on the following expression. Capacity retention rate (%) = (storage capacity)/(initial discharge capacity) × 100

### <Measurement of resistance increase rate after low temperature cycle test>

At 25°C, the battery was charged to 4.2 V at a constant current corresponding to 0.2 C, and then discharged to 3.0 V at a constant current of 0.2 C. 2 cycles of this operation were carried out to stabilize the battery. After that, in an environment of -10°C, the secondary battery produced above was charged to 4.2 V at a constant current of 0.2 C, then charged at a constant voltage of 4.2 V until the current value was 0.05 C, and discharged to 3.0 V at a constant current of 0.2 C to determine the initial discharge capacity. A 200 cycle test was carried out by carrying out charge and discharge in the same manner.

The resistance of the battery at the time of calculating the initial discharge capacity stabilized as described above and the resistance thereof after the cycle test were measured. The measurement temperature was -20°C. The resistance increase rate after the low temperature cycle test was determined based on the following expression. Resistance increase rate (%) = resistance (Ω) after 200 cycles/resistance (Ω) after calculating initial discharge capacity × 100

Results are shown in Table 2.

### [Table 2]

**Table 2**

| | Copolymer | Inorganic particle | Component ratio (% by mass) | | Coated electrode | Capacity retention rate (%) | Resistance increase rate (%) |
|---|---|---|---|---|---|---|---|
| | | | Copolymer | Inorganic particle | | | |
| Example 8 | b | X | 5 | 95 | Negative electrode | 85 | 173 |
| Example 9 | b | X | 10 | 90 | Negative electrode | 88 | 164 |
| Example 10 | b | X | 20 | 80 | Negative electrode | 90 | 150 |
| Example 11 | b | X | 40 | 60 | Negative electrode | 89 | 152 |
| Example 12 | a | Z | 30 | 70 | Negative electrode | 85 | 147 |
| Example 13 | c | Y | 25 | 75 | Negative electrode | 88 | 153 |
| Example 14 | a | W | 35 | 65 | Negative electrode | 88 | 150 |
| Comparative Example 3 | d | X | 20 | 80 | Negative electrode | 60 | 218 |
| Comparative Example 4 | - | - | - | - | - | 51 | 230 |

## Claims

1. An electrode comprising an electrode active material layer and a polymer layer formed on the electrode active material layer, wherein the polymer layer comprises a copolymer comprising a fluoromonomer unit and an amide bond-containing monomer unit, and an inorganic particle.

2. The electrode according to claim 1, wherein the fluoromonomer is at least one selected from the group consisting of tetrafluoroethylene, hexafluoropropylene, chlorotrifluoroethylene, and 2,3,3,3-tetrafluoropropene.

3. The electrode according to claim 1 or 2, wherein the amide bond-containing monomer comprises a lactam ring.

4. The electrode according to any one of claims 1 to 3, wherein the amide bond-containing monomer is N-vinyl-2-pyrrolidone.

5. The electrode according to any one of claims 1 to 4, wherein a content of the fluoromonomer unit in the copolymer is 75 to 7 mol% based on all monomer units, and a content of the amide bond-containing monomer unit in the copolymer is 25 to 93 mol% based on all monomer units.

6. The electrode according to any one of claims 1 to 5, wherein the inorganic particle comprises at least one element selected from the group consisting of Mg, Al, Si, Ti, Zr, and Ba.

7. The electrode according to any one of claims 1 to 6, wherein a content proportion of the copolymer to the inorganic particle [(copolymer)/(inorganic particle)] in terms of mass ratio is 0.1/99.9 to 49.9/50.1.

8. The electrode according to any one of claims 1 to 7, wherein the electrode active material layer comprises an electrode active material and a binder, and the binder comprises a polymer, excluding the copolymer comprising the fluoromonomer unit and the amide bond-containing monomer unit.

9. The electrode according to claim 8, wherein the electrode active material is a positive electrode active material.

10. The electrode according to claim 9, wherein the positive electrode active material is a positive electrode active material comprising at least one alkali metal selected from the group consisting of Li, Na, and K.

11. The electrode according to claim 9 or 10, wherein the positive electrode active material is a positive electrode active material comprising at least one alkali metal selected from the group consisting of Li, Na, and K, and at least one metal selected from the group consisting of Fe, Ni, Mn, Cu, Zn, Al, Sn, Cr, V, Ti, Mg, Ca, Sr, B, Ga, In, Si, and Ge.

12. The electrode according to any one of claims 9 to 11, wherein the electrode active material layer further comprises a conductive material.

13. The electrode according to claim 12, wherein when a mass of the electrode active material layer is 100% by mass, a content of the positive electrode active material is 80.0 to 99.8% by mass, a content of the conductive material is 0.1 to 10.0% by mass, and a content of the binder is 0.1 to 10.0% by mass.

14. The electrode according to claim 8, wherein the electrode active material is a negative electrode active material.

15. The electrode according to claim 14, wherein the negative electrode active material is a negative electrode active material comprising a carbonaceous material, or a negative electrode active material comprising a compound comprising at least one element selected from the group consisting of Si, Sn, V, Nb, and Ti.

16. The electrode according to claim 14 or 15, wherein when a mass of the electrode active material layer is 100% by mass, a content of the negative electrode active material is 99.9 to 80.0% by mass, and a content of the binder is 0.1 to 20.0% by mass.

17. The electrode according to any one of claims 1 to 16, wherein the electrode is used in an electrochemical device.

18. A secondary battery comprising the electrode according to any one of claims 1 to 17.
